# EUROPÄISCHE PATENTANMELDUNG

(11) **EP 3 713 272 A1**
(43) Veröffentlichungstag der Anmeldung: **23.09.2020**
(21) Anmeldenummer: 19163693.5
(22) Anmeldetag: 19.03.2019
(51) Int. Cl.: H04W 12/04, G05B 19/418, H04L 29/06, H04L 29/08

(54) **VERFAHREN ZUM AUFBAU EINER GESICHERTEN DATENÜBERTRAGUNG**

(71) Anmelder: Siemens Aktiengesellschaft, 80333 München (DE)
(72) Erfinder: Meier, Matthias, 92284 Poppenricht (DE)

(57) **Zusammenfassung**

Die Erfindung betrifft ein Verfahren (100) zum Aufbau einer gesicherten Datenübertragung (88) zwischen einem Infrastrukturgerät (2) und einem Diagnosegerät (6). Das Verfahren umfasst die folgenden Schritte: Senden (85) eines Schlüssels (4) durch das Infrastrukturgerät (2) unter Verwendung von Licht; Empfangen (86) des gesendeten Schlüssels (4) durch das Diagnosegerät (6); und Ausführen der gesicherten Datenübertragung (88) unter Verwendung des Schlüssels (4).

## Beschreibung

Die Erfindung betrifft ein Verfahren zum Aufbau einer gesicherten Datenübertragung. Ebenso betrifft die Erfindung ein Computerprogrammprodukt, mit dem das Betriebsverfahren durchführbar ist. Gleichermaßen betrifft die Erfindung eine Steuereinheit, die mit einem entsprechenden Computerprogrammprodukt ausgestattet ist.

Im dem Maße, in dem weltweit technische Infrastruktursysteme, z.B. Strom- und Telekommunikationsnetze, und Industrieanlagen, z.B. Chemische Fabriken oder Kerntechnische Anlagen, immer mehr ins Visier von Hackerangriffen geraten und die Bedrohung durch Industriespionage über das allgegenwärtige Internet zunimmt, wächst auch der Bedarf an gesicherten Datenübertragungen im industriellen Umfeld, die abhörsicher und nicht manipulierbar sind. Auch für das Konzept Industrie 4.0 ist es wichtig, dass Daten sicher übertragen werden. Dabei müssen Daten auch gegen Angriffe von außen abgesichert werden.

Der Erfindung liegt daher die Aufgabe zugrunde, eine gesicherte Datenübertragung bereitzustellen.

Die Aufgabe wird gelöst durch ein Verfahren gemäß Anspruch 1. Das Verfahren dient dem Aufbau einer gesicherten Datenübertragung zwischen einem Infrastrukturgerät und einem Diagnosegerät.

Das Infrastrukturgerät kann ein Gerät sein, welches eine Funktion in einer technischen Infrastruktur hat. Im Bereich einer Infrastruktur zur Kommunikation kann das Infrastrukturgerät ein Router, ein Switch, eine Bridge, ein Hub, ein dezentrales Peripheriegerät eines industriellen Automatisierungssystems oder ein Automatisierungsgerät mit Kommunikationsschnittstelle, ein Anzeigegerät, ein Eingabegerät oder ein Drucker sein. Im Bereich einer Infrastruktur zur Stromversorgung und im Bereich der Automatisierungstechnik kann das Infrastrukturgerät ein Schaltgerät der industriellen Schalttechnik sein, z.B. ein Relais zum Schalten einer Stromversorgungs- oder Steuerleitung oder ein Schütz zum Schalten einer Stromversorgungsleitung, ein Leistungsschalter, ein Motorstarter oder ein Sanftstarter sein. Das Infrastrukturgerät kann eine Kommunikationsschnittstelle aufweisen, mittels der das Infrastrukturgerät an ein Kommunikationsnetz, beispielsweise ein z.B. Ethernet-basiertes Feldbus-System oder das Internet, angeschlossen sein kann. Über diese Kommunikationsschnittstelle kann das Infrastrukturgerät mit einem weiteren Gerät des Kommunikationsnetzes kommunizieren, z.B. Steuerbefehle von einem Steuergerät empfangen oder Daten an ein Edge Device senden.

Das Infrastrukturgerät weist eine - in das Gerät integrierte oder externe - Kommunikationsschnittstelle für ein Senden von Daten an das Diagnosegerät unter Verwendung von Licht auf; diese Kommunikationsschnittstelle wird im Folgenden kurz als Licht-Sender bezeichnet. Der Licht-Sender des Infrastrukturgeräts kann als eine LED oder als eine Flüssigkristallanzeige ausgebildet sein (LED = Light Emitting Diode). Im Fall, dass das Infrastrukturgerät als ein Schaltgerät ausgebildet ist, kann der Licht-Sender eine in das Schaltgerät integrierte LED-Betriebsanzeige oder ein grafisches Display sein. Das Infrastrukturgerät kann zusätzlich zu dem Licht-Sender noch eine oder mehrere weitere - integrierte oder externe - Kommunikationsschnittstellen aufweisen, mittels der das Infrastrukturgerät mit dem Diagnosegerät kommunizieren kann. So kann das Infrastrukturgerät beliebige weitere Kommunikationsschnittstelle aufweisen, z.B. eine Kommunikationsschnittstelle für ein Empfangen von Daten unter Verwendung von Licht, eine Kommunikationsschnittstelle für ein Empfangen und/oder Senden von Daten via Bluetooth, WLAN oder anderen Datenübertragungsstandards, drahtlos oder kabelgebunden (WLAN = Wireless Local Area Network). Es ist möglich, dass das Infrastrukturgerät erst durch ein Verbinden mit einem externen Kommunikationsschnittstellen-Gerät, z.B. einem Funkübertragungsmodul (engl.: transmitter dongle), kommunikationsfähig zu einer Kommunikation mit dem Diagnosegerät wird. Die Verbindung des externen Kommunikationsschnittstellen-Geräts mit dem Infrastrukturgerät kann über eine drahtlose Verbindung, z.B. via Bluetooth, über eine Kabelverbindung oder durch ein Ein- bzw. Aufstecken des Kommunikationsschnittstellen-Geräts auf das Infrastrukturgerät erfolgen, z.B. indem ein Stecker des Kommunikationsschnittstellen-Geräts in eine Buchse des Infrastrukturgeräts gesteckt wird. Die Stecker-/Buchsen-Paare können als beliebige Datenübertragungsschnittstellen ausgebildet sein, z.B. dem Standard USB oder RS-232 entsprechen (USB = Universal Serial Bus; RS-232 = Recommended Standard 232) .

Das Diagnosegerät dient dazu, vom Infrastrukturgerät bereit gestellte Daten wie Status-, Parameter- und Fehlerinformationen zu empfangen, zu verarbeiten und an einen Nutzer auszugeben, z.B. mittels einer Anzeigevorrichtung des Diagnosegerätes darzustellen. Das Diagnosegerät kann auch dazu dienen, vom Infrastrukturgerät empfangene Daten mithilfe einer Software zu analysieren und auszuwerten. Das Diagnosegerät kann auch dazu dienen, Daten zum Infrastrukturgerät zu übertragen, z.B. Parameterdaten zur Parametrierung des Infrastrukturgeräts.

Das Diagnosegerät kann beispielsweise ein tragbarer Computer, ein Laptop-PC, ein Tablet-PC, ein PDA oder ein Smartphone sein (PC = Personal Computer; PDA = Personal Digital Assistant). Das Diagnosegerät kann einen Prozessor und einen Speicher mit einer auf dem Prozessor ausführbaren Software umfassen, welche die oben beschriebenen Verarbeitungsschritte auszuführen in der Lage ist. So kann beispielsweise das Diagnosegerät selbständig eine Datenverbindung zu einer durch eine von dem Infrastrukturgerät empfangene IP-Adresse identifizierbare Website aufbauen, wo ein Nutzer des Diagnosegerätes weitere Informationen zu dem Infrastrukturgerät finden kann, z.B. eine FAQ-Hilfeseite (IP = Internet Protocol; FAQ = Frequently Asked Questions).

Das Diagnosegerät weist eine - in das Gerät integrierte oder externe - Kommunikationsschnittstelle für ein Empfangen von Daten unter Verwendung von Licht auf; diese Kommunikationsschnittstelle wird im Folgenden kurz als Licht-Empfänger bezeichnet. Der Licht-Empfänger des Diagnosegeräts kann als eine Kamera ausgebildet sein. Im Fall, dass das Diagnosegerät als ein Smartphone ausgebildet ist, kann der Licht-Empfänger eine in das Smartphone integrierte Kamera sein. Das Diagnosegerät kann zusätzlich zu dem Licht-Empfänger noch eine oder mehrere weitere - integrierte oder externe - Kommunikationsschnittstellen aufweisen. So kann das Diagnosegerät beliebige weitere Kommunikationsschnittstelle aufweisen, z.B. eine Kommunikationsschnittstelle für ein Senden von Daten unter Verwendung von Licht, eine Kommunikationsschnittstelle für ein Empfangen und/oder Senden von Daten via Bluetooth, WLAN oder anderen Datenübertragungsstandards drahtlos oder kabelgebunden. Es ist möglich, dass das Diagnosegerät durch ein Verbinden mit einem externen Kommunikationsschnittstellen-Gerät, z.B. einem Funkübertragungsmodul, eine weitere Kommunikationsschnittstelle aufweist. Die Verbindung des externen Kommunikationsschnittstellen-Geräts mit dem Diagnosegerät kann über eine drahtlose Verbindung, z.B. via Bluetooth, über eine Kabelverbindung oder durch ein Ein- bzw. Aufstecken des Kommunikationsschnittstellen-Geräts auf das Diagnosegerät erfolgen, z.B. indem ein Stecker des Kommunikationsschnittstellen-Geräts in eine Buchse des Diagnosegeräts gesteckt wird. Die Stecker-/Buchsen-Paare können als beliebige Datenübertragungsschnittstellen ausgebildet sein, z.B. dem Standard USB oder RS-232 entsprechen (USB = Universal Serial Bus; RS-232 = Recommended Standard 232).

Eine gesicherte Datenübertragung ist eine Übertragung von Daten von einem Sender zu einem Empfänger, nachdem die Daten beim Sender mittels eines Schlüssels verschlüsselt wurden. Eine Verschlüsselung ist dabei die von einem Schlüssel abhängige Umwandlung von Daten in eine verschlüsselte Nachricht, so dass die Daten aus der verschlüsselten Nachricht nur unter Verwendung desselben Schlüssels (bei symmetrischer Verschlüsselung) oder eines anderen Schlüssels (bei asymmetrischer Verschlüsselung) wiedergewonnen werden können. Die Verschlüsselung dient zur Geheimhaltung der Daten, beispielsweise um Daten gegenüber unbefugtem Zugriff zu schützen.

Der Schlüssel kann eine Zufallszahl sein, die bei jedem Neustart des Infrastrukturgeräts durch einen im Infrastrukturgerät implementierten Zufallszahlengenerator neu erzeugt und in einem Speicher des Infrastrukturgeräts gespeichert wird. Der Schlüssel kann aber auch durch einen Nutzer definiert und in einem Speicher des Infrastrukturgeräts gespeichert werden, durch eine Übertragung über eine Kommunikationsschnittstelle des Infrastrukturgeräts.

Das Verfahren umfasst ein Senden des Schlüssels durch das Infrastrukturgerät unter Verwendung von Licht. Beim Senden des Schlüssels durch das Infrastrukturgerät unter Verwendung von Licht wird der Schlüssel mit Hilfe des Übertragungsmediums Licht übertragen. Nachdem das Infrastrukturgerät ein Auslösesignal empfangen hat, welches ein Senden des Schlüssels auslöst, beginnt das Infrastrukturgerät mit dem Senden des Schlüssels. Es ist möglich, dass das Senden des Schlüssels durch eine Steuereinheit des Infrastrukturgeräts gesteuert wird. Es ist möglich, dass die Steuereinheit eine Übertragung des in einem Speicher des Infrastrukturgeräts gespeicherten Schlüssels an eine Umwandlungseinheit steuert, welche den in einem ersten Datenformat gespeicherten Schlüssel in Licht-Sendebefehle umwandelt, womit ein Licht-Sender in der Lage ist, den Schlüssel mithilfe von Lichtsignalen zu senden. Es ist möglich, dass die Steuereinheit das Senden des Schlüssels durch den Licht-Sender auf Basis der Licht-Sendebefehle steuert.

Das Verfahren umfasst ein Empfangen des gesendeten Schlüssels durch das Diagnosegerät. Die von dem Licht-Sender gesendeten Lichtsignale werden von einem Licht-Empfänger des Diagnosegeräts empfangen. Es ist möglich, dass eine Steuereinheit des Diagnosegeräts eine z.B. durch eine Umwandlungseinheit vorzunehmende Umwandlung der empfangenen Lichtsignale in den Schlüssel steuert. Es ist möglich, dass nach der Wiederherstellung des Schlüssels in einem Datenformat, welches eine dauerhafte Speicherung des Schlüssels erlaubt, der Schlüssel in einem Speicher des Diagnosegeräts gespeichert wird.

Das Verfahren umfasst außerdem ein Ausführen der gesicherten Datenübertragung unter Verwendung des Schlüssels. Nach der Übertragung des Schlüssels von dem Infrastrukturgerät an das Diagnosegerät sind sowohl das Infrastrukturgerät als auch das Diagnosegerät im Besitz des Schlüssels. Somit ist ein bidirektionaler Datenaustausch zwischen dem Infrastrukturgerät und dem Diagnosegerät in Form einer durch eine symmetrische Verschlüsselung mittels des Schlüssels gesicherten Datenübertragung möglich.

Die vorliegende Erfindung verbessert die Bereitstellung einer gesicherten Datenübertragung durch die Nutzung einer optischen Übertragung, welche sicherer ist als eine Funkübertragung, da ein Angreifer Sichtkontakt zu der Lichtquelle haben muss, um Datenpakete abfangen beziehungsweise manipulieren zu können. Im Gegensatz zu Funksystemen ist bei optischer Übertragung im Regelfall nur eine direkte Datenübertragung auf Sicht möglich. Daten lassen sich nicht ohne eine direkt Sichtverbindung abfangen, eine Datenübertragung durch bspw. Hauswände hindurch ist nicht möglich. Der durch die vorliegende Erfindung mögliche sichere Schlüsselaustausch schützt die nachfolgende Datenübertragung, da sie nun mithilfe eines praktisch 100%-ig geheimen Schlüssels verschlüsselt werden kann.

Das Verfahren ist zur automatischen Ausführung bevorzugt in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Energiequelle oder eine Tertiärregelungseinheit, in deren Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen können. Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Gemäß einer bevorzugten Ausgestaltung der Erfindung umfasst das Verfahren ein Auswählen des Infrastrukturgeräts. In einer ersten Variante signalisiert das Infrastrukturgerät über ein Funkprotokoll seine Präsenz seiner physischen Umgebung, z.B. gemäß dem Bluetooth-Standard. Sobald das Diagnosegerät die Präsenz des das Infrastrukturgeräts erkennt, signalisiert das Diagnosegerät das Infrastrukturgerät einem Nutzer des Diagnosegeräts; z.B. wird das Infrastrukturgerät auf einem Display des Diagnosegeräts dem Nutzer des Diagnosegeräts angezeigt. Über eine Funkverbindung kann das Diagnosegerät alle erreichbaren Teilnehmer in einer Liste anzeigen. Dem Nutzer des Diagnosegeräts kann dann das Infrastrukturgerät explizit auswählen, z.B. durch ein Drücken einer dem Infrastrukturgerät zugeordneten Taste auf dem Diagnosegerät. In einer zweiten Variante wird das Infrastrukturgerät dadurch ausgewählt, dass es mit einem externen Kommunikationsschnittstellen-Gerät verbunden wird, z.B. durch ein Aufstecken eines Funkübertragungsmoduls auf das Infrastrukturgerät. In einer weiteren Variante wird das Infrastrukturgerät dadurch ausgewählt, dass es gegenüber dem Diagnosegerät identifiziert wird, z. B. durch ein bildliches Aufnehmen bzw. Fotografieren einer ID des Infrastrukturgeräts mit einer Kamera des Diagnosegeräts (ID = Identifikator, Identifier). Auf der Gehäuseaußenseite des Infrastrukturgeräts kann ein das Infrastrukturgerät eindeutig identifizierender 1D- oder 2D-Code, z.B. ein Barcode oder ein QR-Code, angeordnet sein (QR-Code = Quick Response Code). Nach dem Einlesen der ID in das Diagnosegerät kann das Diagnosegerät einem Nutzer zur Kontrolle anzeigen, welches Infrastrukturgerät ausgewählt wurde. Eine solche Kontrolle ist vor allem dann nützlich, wenn in einem Schaltschrank eine Vielzahl von Infrastrukturgeräten eng nebeneinander angeordnet sind, so dass es ungewollt zu Verwechslungen kommen kann.

Gemäß einer bevorzugten Ausgestaltung der Erfindung umfasst das Verfahren ein Auslösen eines Sendens eines dem ausgewählten Infrastrukturgerät zugeordneten Schlüssels durch das ausgewählte Infrastrukturgerät. Das Infrastrukturgerät umfasst dazu einen Speicher, in welchem der Schlüssel speicherbar ist. In einer ersten Variante wird bei einer Verbindungsaufnahme zwischen dem Infrastrukturgerät und dem Diagnosegerät über ein Funkprotokoll der Schlüsselaustausch über das Funkprotokoll initialisiert. In einer weiteren Variante umfasst das Infrastrukturgerät eine Auslösevorrichtung zum Auslösen eines Sendens des im Speicher gespeicherten Schlüssels. Dabei ist es möglich, dass das Auslösen des Sendens des Schlüssels durch eine Betätigung der Auslösevorrichtung durch einen Nutzer erfolgt. Beispielsweise kann ein Nutzer ein Meldegerät am Infrastrukturgerät betätigen, z.B. durch ein Drücken eines Drucktasters. Durch das Betätigen der Auslösevorrichtung wird, vorzugsweise gesteuert von einem Steuergerät des Infrastrukturgeräts, z.B. einem Prozessor, ein Signal erzeugt, das zu einem mit der Auslösevorrichtung verbundenen Licht-Sender des Infrastrukturgeräts gesendet wird, wo das Signal zum Senden des im Speicher gespeicherten Schlüssels durch den Licht- Sender führt. Dabei werden Daten oder Informationen mit Hilfe des Übertragungsmediums Licht übertragen. Ein solches explizites Auslösen des Sendens des Schlüssels bietet einen Vorteil im Hinblick auf die Tatsache, dass der Nutzer des Diagnosegeräts das Diagnosegerät in eine Position bringen muss, an dem das Diagnosegerät eine Sichtverbindung mit dem Infrastrukturgerät hat, um den per Licht gesendeten Schlüssel empfangen zu können. Durch ein explizites Auslösen des Sendens des Schlüssels kann der Nutzer die dazu nötigen Vorbereitungen treffen, bevor er den Schlüssel anfordert.

Gemäß einer bevorzugten Ausgestaltung der Erfindung erfolgt die gesicherte Datenübertragung unter Verwendung von Licht und/oder Funkwellen. Wie die Übertragung des Schlüssels so kann auch die auf dem Schlüssel basierende gesicherte Datenübertragung unter Verwendung von Licht erfolgen. Dazu hat sowohl das Infrastrukturgerät als auch das Diagnosegerät jeweils einen Transceiver zur Datenübertragung mittels Lichts. Es ist auch möglich, dass nach der in Bezug auf Abhörversuche besonders riskanten Übertragung des Schlüssels, für die zum Erschweren von Abfangversuchen Licht verwendet wird, für die nachfolgende gesicherte Datenübertragung zu einem leichter abhörbaren Übertragungsmedium, nämlich einem Funkstandard wie Bluetooth oder WLAN gewechselt wird. Zwar sind Daten über einen Funkstandard leichter abzufangen als bei Lichtübertragung, sie sind aber nun durch den Schlüssel gegen ein unberechtigtes Lauschen verschlüsselt. Es ist auch möglich, dass die gesicherte Datenübertragung sowohl über Licht als auch Funk erfolgt, z.B. das Infrastrukturgerät über Funk sendet und Licht empfängt und das Diagnosegerät über Funk empfängt und über Licht sendet.

Es ist möglich, dass nach dem Schlüsselaustausch Daten, z.B. Zustands- und Fehlerinformationen, Parametrierungsdaten oder IP-Adressen, zwischen dem Infrastrukturgerät und dem Diagnosegerät, z.B. einem Smartphone, in einer durch eine Verschlüsselung mittels des Schlüssels gesicherten Datenübertragung übertragen werden, z.B. in einem industriellen Automatisierungssystem. Mittels einer oder mehrerer Leuchtdioden am Infrastrukturgerät können Daten, z.B. Geräte- oder Kommunikationsstatusinformationen des Infrastrukturgeräts, vom Infrastrukturgerät signalisiert werden. Dabei können die Informationen vom Infrastrukturgerät als frequenzmoduliertes Signal durch zumindest einen dem Infrastrukturgerät zugeordneten Lichtsender, z.B. eine Leuchtdiode, signalisiert, die Signale mittels eines Lichtempfängers des Diagnosegerät , z.B. einer Kamera des Diagnosegeräts, empfangen, d.h. optisch abgetastet, und aus den Signalen die Informationen durch das Diagnosegerät ermittelt werden.

Es ist auch möglich, dass nach dem Schlüsselaustausch eine bidirektionale, durch eine Verschlüsselung mittels des Schlüssels gesicherte Datenkommunikation unter Verwendung von sichtbarem Licht zwischen dem Diagnosegerät, z.B. einem Mobilen Gerät wie einem Smartphone, und dem Infrastrukturgerät, z.B. einem elektrischen Gerät wie einem Motorstarter, erfolgt. Bei dem Smartphone kann das Blitzlicht als Lichtsender und die Kamera als Lichtempfänger von Lichtsignalen dienen. Analog weist auch das elektrische Gerät einen Lichtempfänger, z.B. ein lichtsensor oder eine Photodiode, und einen Lichtsender, z.B. ein Lichtemitter wie eine LED, auf.

Gemäß einer bevorzugten Ausgestaltung der Erfindung ist der Schlüssel ein Produkt aus einer Zufallszahl, d.h. der Schlüssel wird auf Basis einer Zufallszahl berechnet; im einfachsten Fall entspricht der Schlüssel einfach der Zufallszahl. Die Zufallszahl wiederum wird bei einem Neustart des Infrastrukturgeräts durch einen einen im Infrastrukturgerät implementierten Zufallszahlengenerator generiert. Dabei kann der Zufallszahlengenerator beispielsweise in einer Steuereinheit des Infrastrukturgeräts implementiert sein. Beim Starten des Infrastrukturgeräts wird der Zufallszahlengenerator angesteuert, und die erzeugte Zufallszahl bzw. der daraus generierte Schlüssel in einem Speicher des Infrastrukturgeräts gespeichert.

Es ist möglich, dass bereits vor dem Schlüsselaustausch Daten, z.B. Zustands- und Fehlerinformationen, Parametrierungsdaten oder IP-Adressen, zwischen dem optional an ein Kommunikationsnetz angeschlossenen Infrastrukturgerät und dem Diagnosegerät, z.B. einem Smartphone, in einer nicht durch eine Verschlüsselung gesicherten Datenübertragung übertragen werden, z.B. in einem industriellen Automatisierungssystem, z.B. über ein Funkprotokoll, eine IR-Datenschnittstelle oder auch über eine Licht-Datenschnittstelle (IP = Internet Protocol; IR = Infrarot). Die oben beschriebene Kontaktaufnahme zwischen dem Infrastrukturgerät und dem Diagnosegerät mittels Bluetooth ist ein Beispiel für eine solche Datenübertragung vor dem Schlüsselaustausch.

Die skizzierte Aufgabenstellung wird auch durch ein erfindungsgemäßes Computerprogrammprodukt gelöst. Das Computerprogrammprodukt ist in zumindest einer Steuereinheit ausführbar ausgebildet. Das Computerprogrammprodukt kann als Software, z.B. als eine aus dem Internet herunterladbare App, oder Firmware in einem Speicher speicherbar und durch ein Rechenwerk ausführbar ausgebildet sein. Alternativ oder ergänzend kann das Computerprogrammprodukt auch zumindest teilweise als festverdrahtete Schaltung ausgebildet sein, beispielsweise als ASIC (ASIC = Application Specific Integrated Circuit). Es Es ist möglich, dass das Computerprogrammprodukt direkt in den internen Speicher einer digitalen Recheneinheit geladen werden kann und Softwarecodeabschnitte umfasst, mit denen die Schritte des hierin beschriebenen Verfahrens ausgeführt werden, wenn das Produkt auf der Recheneinheit läuft. Das Computerprogrammprodukt kann auf einem Datenträger gespeichert sein, wie z.B. einem USB-Speicherstick, einer DVD oder einer CD-ROM, einem Flash-Speicher, EEPROM oder einer SD-Karte. Das Computerprogrammprodukt kann auch in der Form eines über ein drahtgebundenes oder drahtloses Netzwerk ladbares Signal vorliegen.

Das erfindungsgemäße Computerprogrammprodukt ist dazu ausgebildet, das Verfahren nach einem der oben erwähnten Ansprüche durchzuführen. Das Computerprogrammprodukt ist also dazu ausgebildet, das Verfahren zum Aufbau einer gesicherten Datenübertragung zwischen einem Infrastrukturgerät und einem Diagnosegerät durchzuführen. Insbesondere ist es dazu ausgebildet, den Schritt Senden eines Schlüssels durch das Infrastrukturgerät unter Verwendung von Licht durchzuführen. Außerdem ist es dazu ausgebildet, den Schritt Empfangen des gesendeten Schlüssels durch das Diagnosegerät auszuführen. Weiter ist es dazu ausgebildet, den Schritt Ausführen der gesicherten Datenübertragung unter Verwendung des Schlüssels durchzuführen. Erfindungsgemäß ist das Computerprogrammprodukt dazu ausgebildet, mindestens eine Ausführungsform des skizzierten Verfahrens zum Aufbau einer gesicherten Datenübertragung zwischen einem Infrastrukturgerät und einem Diagnosegerät umzusetzen und durchzuführen. Dabei kann das Computerprogrammprodukt sämtliche Teilfunktionen des Verfahrens in sich vereinigen, also monolithisch ausgebildet sein. Alternativ kann das Computerprogrammprodukt auch segmentiert ausgebildet sein und jeweils Teilfunktionen auf Segmente verteilen, die auf separater Hardware ausgeführt werden. So kann das Computerprogrammprodukt teilweise in einer Steuereinheit des Infrastrukturgeräts und teilweise in einer Steuereinheit des Diagnosegeräts ausführbar ausgebildet sein. Außerdem kann ein Teil des Verfahrens in einem Infrastrukturgerät durchgeführt werden und ein anderer Teil des Verfahrens in einer dem Infrastrukturgerät übergeordneten Steuereinheit, wie beispielsweise einer SPS, einem Handparametriergerät oder einer Computer-Cloud. Außerdem kann ein Teil des Verfahrens in einem Diagnosegerät durchgeführt werden und ein anderer Teil des Verfahrens in einer dem Diagnosegerät übergeordneten Steuereinheit, wie beispielsweise einem Telekommunikationsserver oder einer Computer-Cloud.

Die skizzierte Aufgabenstellung wird auch durch ein erfindungsgemäßes Computerprogrammprodukt gelöst, welches dazu ausgebildet ist, das Verfahren zum Aufbau einer gesicherten Datenübertragung zwischen einem Infrastrukturgerät und einem Diagnosegerät durchzuführen und welches in einer Steuereinheit eines Infrastrukturgeräts ausführbar ausgebildet ist. Dabei ist das Computerprogrammprodukt dazu ausgebildet, den Schritt Senden eines Schlüssels durch das Infrastrukturgerät unter Verwendung von Licht durchzuführen. Außerdem ist das Computerprogrammprodukt dazu ausgebildet, den Schritt Ausführen der gesicherten Datenübertragung zwischen dem Infrastrukturgerät und dem Diagnosegerät unter Verwendung des Schlüssels durchzuführen.

Die skizzierte Aufgabenstellung wird auch durch ein erfindungsgemäßes Computerprogrammprodukt gelöst, welches dazu ausgebildet ist, das Verfahren zum Aufbau einer gesicherten Datenübertragung zwischen einem Infrastrukturgerät und einem Diagnosegerät durchzuführen und welches in einer Steuereinheit eines Diagnosegeräts ausführbar ausgebildet ist. Dabei ist das Computerprogrammprodukt dazu ausgebildet, den Schritt Empfangen des von einem Infrastrukturgerät unter Verwendung von Licht gesendeten Schlüssels durch das Diagnosegerät durchzuführen. Außerdem ist das Computerprogrammprodukt dazu ausgebildet, den Schritt Ausführen der gesicherten Datenübertragung zwischen dem Infrastrukturgerät und dem Diagnosegerät unter Verwendung des Schlüssels durchzuführen, der von dem Infrastrukturgerät empfangen wurde.

Die skizzierte Aufgabenstellung wird auch durch ein erfindungsgemäßes Infrastrukturgerät gelöst, welches einen Speicher, z.B. einen Festkörperspeicher, wie sie in USB-Sticks eingesetzt werden, zum Speichern eines Schlüssels, einen Licht-Sender, z.B. eine LED, zum Senden des Schlüssels unter Verwendung von Licht und einen Transceiver, umfassend einen Sender, z.B. eine LED oder einen Funksender, und einen Empfänger, z.B. eine Photodiode, eine Kamera oder einen Funkempfänger, zum Ausführen einer gesicherten Datenübertragung unter Verwendung des Schlüssels umfasst, wobei das Infrastrukturgerät zur Durchführung eines der oben genannten Verfahrens ausgestaltet und eingerichtet ist.

Gemäß einer bevorzugten Ausgestaltung der Erfindung umfasst das Infrastrukturgerät eine mit dem Licht-Sender verbundene Auslösevorrichtung, z.B. eine Drucktaste oder ein Funkübertragungsmodul, zum Auslösen eines Sendens des im Speicher gespeicherten Schlüssels. Es ist möglich, dass ein Nutzer des Diagnosegeräts, der die Datenkommunikation zwischen dem Infrastrukturgerät und dem Diagnosegerät aufbauen möchte, eine dem Infrastrukturgerät zugeordnete Taste drückt, um das Senden des Schlüssels auszulösen. Es ist auch möglich, dass der Nutzer des Diagnosegeräts ein Funkübertragungsmodul mit dem Infrastrukturgerät verbindet und dass dieser Verbindungsschritt das Senden des Schlüssels auslöst.

Die skizzierte Aufgabenstellung wird auch durch ein erfindungsgemäßes Diagnosegerät gelöst, welches einen Empfänger, z.B. eine Photodiode oder eine Kamera, zum Empfangen eines Schlüssels unter Verwendung von Licht, einen Speicher, z.B. einen Festkörperspeicher, wie sie in USB-Sticks eingesetzt werden, zum Speichern des Schlüssels und einen Transceiver, umfassend einen Sender, z.B. eine LED oder einen Funksender, und einen Empfänger, z.B. eine Photodiode, eine Kamera oder einen Funkempfänger, zum Ausführen einer gesicherten Datenübertragung unter Verwendung des gespeicherten Schlüssels umfasst, wobei das Diagnosegerät zur Durchführung eines der oben genannten Verfahrens ausgestaltet und eingerichtet ist. Das Diagnosegerät kann z.B. ein Smartphone sein.

Gemäß einer bevorzugten Ausgestaltung der Erfindung umfasst das Diagnosegerät einen Lichtsender, insbesondere eine Blitzvorrichtung. Das Diagnosegerät kann z.B. ein Smartphone sein, welches eine integrierte Kamera mit einem Blitzlicht aufweist.

Die Erfindung wird im Folgenden anhand einzelner Ausführungsformen beschrieben. Die Merkmale der einzelnen Ausführungsformen sind dabei untereinander kombinierbar. Es zeigt im Einzelnen:
- Fig. 1: einen Motorabzweig;
- Fig. 2: eine erste Ausführungsform des beanspruchten Verfahrens;
- Fig. 3: eine weitere Ausführungsform des beanspruchten Verfahrens;
- Fig. 4: ein Ablaufdiagramm des beanspruchten Verfahrens.

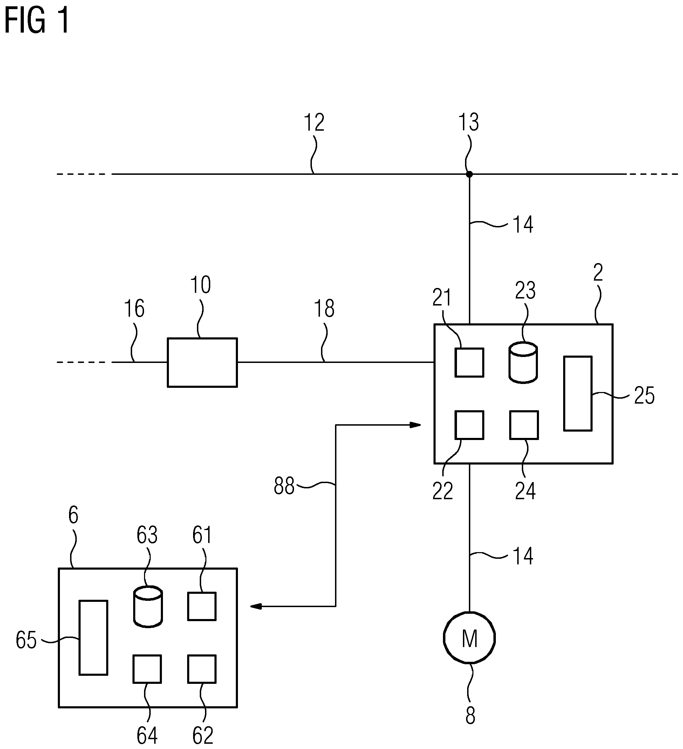

FIG 1 zeigt schematisch ein System der industriellen Schalttechnik. Ein Motorabzweig 13 zur Stromversorgung eines Elektromotors 8 ist mit einem industriellen Stromversorgungsnetz 12, z.B. einem Drehstromnetz, verbunden. In eine Verbraucherleitung 14, die den Elektromotors 8 mit dem Motorabzweig 13 verbindet, ist ein Infrastrukturgerät 2 in Form eines Motorstarters geschaltet, durch den die Stromversorgung des Elektromotors 8 gesteuert werden kann.

Das Infrastrukturgerät 2 umfasst eine Steuereinheit 24 zur Steuerung der Funktionen des Infrastrukturgeräts 2 sowie, mit der Steuereinheit 24 verbunden, einen Licht-Empfänger 21, einen Licht-Sender 22, einen Speicher 23 zum Speichern von Computerprogrammprodukten und Daten und einen Transceiver 25. Der Transceiver 25 kann ein externer Funk-Transceiver sein, der auf das Infrastrukturgerät 2 aufgesteckt wird. Das Infrastrukturgerät 2 ist über eine Steuerleitung 18 mit einem Steuergerät 10 verbunden, von dem es Steuerbefehle erhält, z.B. zum Öffnen und Schließen von stromführenden Kontakten des Infrastrukturgeräts 2, wodurch die Stromversorgung des Elektromotors 8 gesteuert werden kann. Das Steuergerät 10 ist durch eine Kommunikationsverbindung 16 mit einem nicht dargestellten Kommunikationsnetzwerk, z.B. dem Internet, verbunden. Über diese Kommunikationsverbindung 16 kann das Steuergerät 10 komfortabel aus der Ferne parametriert werden oder Daten aus dem Internet, z.B. einem Server, auf das Infrastrukturgerät 2 geladen werden.

Im Speicher 23 des Infrastrukturgeräts 2 ist ein Computerprogrammprodukt gespeichert, welches bei Ausführung in der Steuereinheit 24 des Infrastrukturgeräts 2 dazu ausgebildet ist, ein Verfahren zum Aufbau einer gesicherten Datenübertragung zwischen dem Infrastrukturgerät 2 und einem Diagnosegerät 6 auszuführen. Dabei ist das Computerprogrammprodukt dazu ausgebildet, den Schritt Senden eines Schlüssels durch das Infrastrukturgerät 2 unter Verwendung von Licht durchzuführen. Außerdem ist das Computerprogrammprodukt dazu ausgebildet, den Schritt Ausführen einer gesicherten Datenübertragung 88 zwischen dem Infrastrukturgerät 2 und dem Diagnosegerät 6 unter Verwendung des Schlüssels durchzuführen. Das Computerprogrammprodukt ist über die kabelgebundene Kommunikationsverbindung 16 und die Steuerleitung 18 aus dem Internet heruntergeladen worden, wo es z.B. als App eines Herstellers des Infrastrukturgeräts 2 zum Download angeboten wird.

Das Infrastrukturgerät 2 kommuniziert über eine gesicherte Datenübertragung, z.B. per Funk, mit einem Diagnosegerät 6. Das Diagnosegerät 6 umfasst eine Steuereinheit 64 zur Steuerung der Funktionen des Diagnosegeräts 6 sowie, mit der Steuereinheit 64 verbunden, einen Licht-Empfänger 61, einen Licht-Sender 62, einen Speicher 63 zum Speichern von Computerprogrammprodukten und Daten und einen Transceiver 65.

Im Speicher 63 des Diagnosegeräts 6 ist ein Computerprogrammprodukt gespeichert, welches bei Ausführung in der Steuereinheit 64 des Diagnosegeräts 6 dazu ausgebildet ist, ein Verfahren zum Aufbau einer gesicherten Datenübertragung zwischen dem Infrastrukturgerät 2 und dem Diagnosegerät 6 auszuführen. Dabei ist das Computerprogrammprodukt dazu ausgebildet, den Schritt Empfangen, durch das Diagnosegerät 6, des von einem Infrastrukturgerät 2 unter Verwendung von Licht gesendeten Schlüssels durchzuführen. Außerdem ist das Computerprogrammprodukt dazu ausgebildet, den Schritt Ausführen der gesicherten Datenübertragung 88 zwischen dem Infrastrukturgerät 2 und dem Diagnosegerät 6 unter Verwendung des Schlüssels durchzuführen, der von dem Infrastrukturgerät 2 empfangen wurde. Das Computerprogrammprodukt ist über eine drahtlose Kommunikationsverbindung des Diagnosegeräts 6 mit dem Internet, z.B. per WLAN, aus dem Internet heruntergeladen worden, wo es z.B. als App eines Herstellers des Infrastrukturgeräts 2 zum Download angeboten wird.

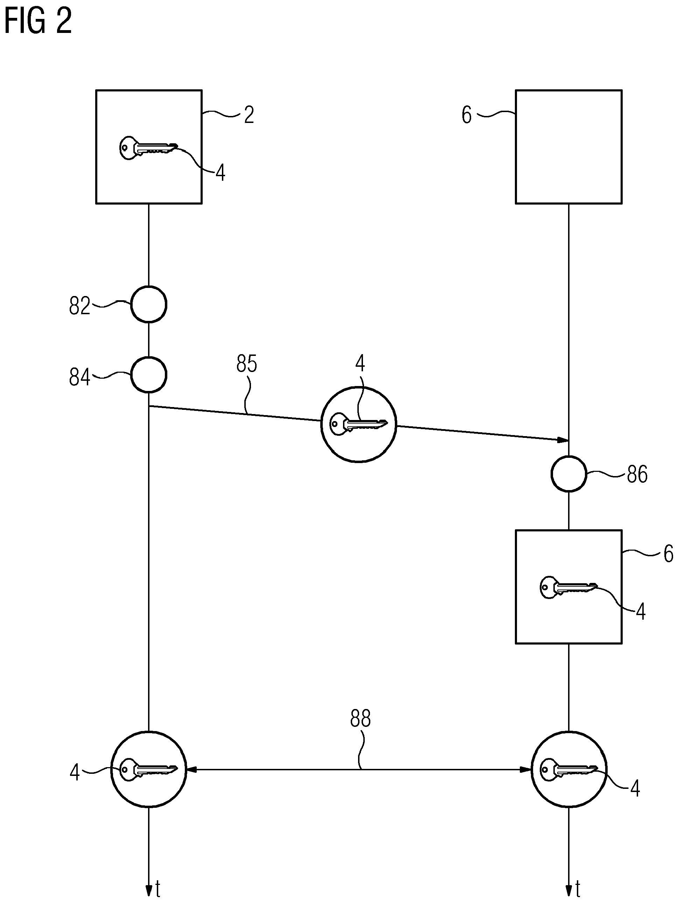

Fig. 2 veranschaulicht den zeitlichen Ablauf t einer ersten Ausführungsform des beanspruchten Verfahrens mit den in Fig. 1 dargestellten Geräten 2 und 6. Zu einem ersten Zeitpunkt ist das Infrastrukturgerät 2 im Besitz des Schlüssels 4, während das Diagnosegerät 6 nicht im Besitz des Schlüssels ist. Der Schlüssel wurde nach dem Anschalten des Infrastrukturgeräts 2 im Infrastrukturgerät 2 selbst erzeugt. Ein Nutzer wählt 82 das Infrastrukturgerät 2, indem er es mit einem externen Transceiver, auch als Kommunikationsschnittstellen-Gerät bezeichnet, z.B. einem Funk-Dongle, verbindet, wodurch das Infrastrukturgerät 2 kommunikationsfähig zu einer Kommunikation per Funk mit dem Diagnosegerät 6 wird. Gleichzeitig löst 84 die Steuereinheit 24 des Infrastrukturgeräts 2, getriggert durch die Verbindung des Funk-Dongles mit dem Infrastrukturgerät 2, ein Senden 85 des Schlüssels durch den Lichtsender 22 unter Verwendung von Licht aus. Der Lichtempfänger 61 des Diagnosegeräts 6 empfängt 86 die den Schlüssel 4 enthaltenden Lichtsignale, wandelt sie in der Steuereinheit 64 um und speichert den Schlüssel im Speicher 63. Somit sind zu einem nach dem ersten Zeitpunkt liegenden zweiten Zeitpunkt sowohl das Infrastrukturgerät 2 als auch das Diagnosegerät 6 im Besitz des Schlüssels 4; nun wird eine gesicherte Datenübertragung 88 zwischen dem Infrastrukturgerät 2 und dem Diagnosegerät 6 durchgeführt, per Funk zwischen den Transceivern 25, 65 der beiden Geräte 2, 6.

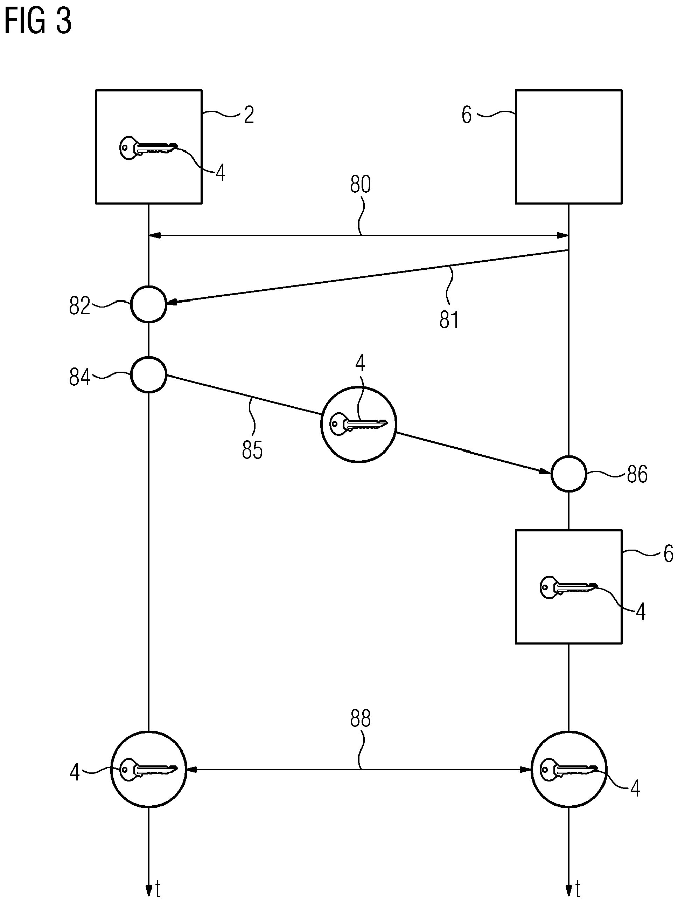

Fig. 3 veranschaulicht den zeitlichen Ablauf t einer weiteren Ausführungsform des beanspruchten Verfahrens mit den in Fig. 1 dargestellten Geräten 2 und 6. Zu einem ersten Zeitpunkt ist das Infrastrukturgerät 2 im Besitz des Schlüssels 4, während das Diagnosegerät 6 nicht im Besitz des Schlüssels ist.

Der Schlüssel wurde nach dem Anschalten des Infrastrukturgeräts 2 im Infrastrukturgerät 2 selbst erzeugt.

Beide Geräte 2 und 6 bauen gemäß dem Bluetooth-Protokoll eine Funkverbindung 80 zwischen sich auf, die sie mittels ihrer Transceiver 25 und 65 durchführen. Die initiale Funkverbindung geht dabei vorzugsweise von dem Diagnosegerät 6 aus, das sich dadurch zum "Master" über das antwortende Infrastrukturgerät 2 erhebt, das als "Slave" agiert. Das Infrastrukturgerät 2 und das Diagnosegerät 6 führen also bereits vor der Schlüsselübertragung und vor einer später einsetzenden gesicherten Datenübertragung eine ungesicherte Datenübertragung durch. Es ist möglich, dass außer der Kontaktaufnahme und dem Kommunikationsaufbau gemäß Bluetooth, insbesondere einer Kommunikation während des Pairing-Prozesses, auch andere Daten, z.B. Zustands- und Fehlerinformationen, Parametrierungsdaten oder IP-Adressen, zwischen dem Infrastrukturgerät 2 und dem Diagnosegerät 6 übertragen werden, z.B. über ein Funkprotokoll.

Ein Nutzer wählt das auf seinem Diagnosegerät 6 als ein mögliches Kommunikationsziel angezeigte Infrastrukturgerät 2 aus, z.B. durch Anklicken oder Berühren eines Symbols auf einem Touchdisplay des Diagnosegeräts 6, woraufhin das Diagnosegerät 6 ein Auswahlsignal 81 per Bluetooth an das Infrastrukturgerät 2 sendet und somit eine Auswahl 82 des Infrastrukturgerät 2 trifft. Gleichzeitig löst 84 die Steuereinheit 24 des Infrastrukturgeräts 2, getriggert durch das Auswahlsignal 81 des Diagnosegeräts 6, ein Senden 85 des Schlüssels durch den Lichtsender 22 unter Verwendung von Licht aus. Der Lichtempfänger 61 des Diagnosegeräts 6 empfängt 86 die den Schlüssel 4 enthaltenden Lichtsignale, wandelt sie in der Steuereinheit 64 um und speichert den Schlüssel im Speicher 63. Somit sind zu einem nach dem ersten Zeitpunkt liegenden zweiten Zeitpunkt sowohl das Infrastrukturgerät 2 als auch das Diagnosegerät 6 im Besitz des Schlüssels 4; nun wird eine gesicherte Datenübertragung 88 zwischen dem Infrastrukturgerät 2 und dem Diagnosegerät 6 durchgeführt, per Funk zwischen den Transceivern 25, 65 der beiden Geräte 2, 6.

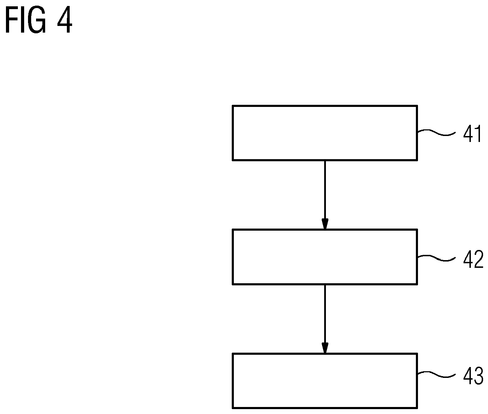

Fig. 4 zeigt ein Ablaufdiagramm des beanspruchten Verfahrens zum Aufbau einer gesicherten Datenübertragung 88 zwischen einem Infrastrukturgerät 2 und einem Diagnosegerät 6, wie es von einem Computerprogrammprodukt abgearbeitet wird, das auf mindestens einer Steuereinheit, der des Infrastrukturgeräts 2 und/oder der des Diagnosegeräts 6, abläuft. In einem ersten Schritt 41 veranlasst das Computerprogrammprodukt ein Senden 85 eines Schlüssels durch das Infrastrukturgerät unter Verwendung von Licht. In einem zweiten Schritt 42 veranlasst das Computerprogrammprodukt ein Empfangen 86 des gesendeten Schlüssels durch das Diagnosegerät 6. In einem dritten Schritt 43 veranlasst das Computerprogrammprodukt ein Ausführen der gesicherten Datenübertragung 88 unter Verwendung des Schlüssels 4.

## Patentansprüche

1. Verfahren (100) zum Aufbau einer gesicherten Datenübertragung (88) zwischen einem Infrastrukturgerät (2) und einem Diagnosegerät (6), umfassend die Schritte:
- Senden (85) eines Schlüssels (4) durch das Infrastrukturgerät (2) unter Verwendung von Licht;
- Empfangen (86) des gesendeten Schlüssels (4) durch das Diagnosegerät (6);
- Ausführen der gesicherten Datenübertragung (88) unter Verwendung des Schlüssels (4).

2. Verfahren (100) nach Anspruch 1, umfassend ein Auswählen (82) des Infrastrukturgeräts (2).

3. Verfahren (100) nach Anspruch 1 oder 2, umfassend ein Auslösen (84) des Sendens des Schlüssels (4).

4. Verfahren (100) nach einem der Ansprüche 1 bis 3, wobei die gesicherte Datenübertragung (88) unter Verwendung von Licht oder Funkwellen erfolgt, insbesondere mittels der Funkstandards Bluetooth oder WLAN.

5. Verfahren (100) nach einem der Ansprüche 1 bis 4, wobei der Schlüssel (4) ein Produkt aus einer Zufallszahl ist, die bei jedem Neustart des Infrastrukturgeräts (2) durch einen Zufallszahlengenerator des Infrastrukturgeräts (2) neu erzeugt wird.

6. Computerprogrammprodukt (80), welches zur Durchführung eines Verfahrens (100) nach einem der Ansprüche 1 bis 5 ausgebildet ist.

7. Computerprogrammprodukt (80) zum Aufbau einer gesicherten Datenübertragung (88) zwischen einem Infrastrukturgerät (2) und einem Diagnosegerät (6), wobei das Computerprogrammprodukt (80) in einer Steuereinheit (24) des Infrastrukturgeräts (2) ausführbar und zur Durchführung folgender Schritte ausgebildet ist:
- Senden (85) eines Schlüssels (4) durch das Infrastrukturgerät unter Verwendung von Licht;
- Ausführen der gesicherten Datenübertragung (88) zwischen dem Infrastrukturgerät (2) und dem Diagnosegerät (6) unter Verwendung des Schlüssels (4), der von dem Diagnosegerät (6) empfangen wurde.

8. Computerprogrammprodukt (80) zum Aufbau einer gesicherten Datenübertragung (88) zwischen einem Infrastrukturgerät (2) und einem Diagnosegerät (6), wobei das Computerprogrammprodukt (80) in einer Steuereinheit (24) eines Diagnosegeräts (6) ausführbar und zur Durchführung folgender Schritte ausgebildet ist:
- Empfangen (86) eines von dem Infrastrukturgerät (2) unter Verwendung von Licht gesendeten Schlüssels (4) durch das Diagnosegerät (6);
- Ausführen der gesicherten Datenübertragung (88) zwischen dem Diagnosegerät (6) und dem Infrastrukturgerät (2) unter Verwendung des Schlüssels (4).

9. Infrastrukturgerät (2), umfassend
- einen Speicher (23) zum Speichern eines Schlüssels (4);
- einen Licht-Sender (22) zum Senden (85) des Schlüssels (4) unter Verwendung von Licht;
- einen Transceiver (25) zum Ausführen einer gesicherten Datenübertragung (88) unter Verwendung des Schlüssels (4), wobei das Infrastrukturgerät (2) zur Durchführung eines Verfahrens nach einem der Ansprüche 1 bis 5 ausgestaltet und eingerichtet ist.

10. Infrastrukturgerät (2) nach Anspruch 9, umfassend eine mit dem Licht-Sender verbundene Auslösevorrichtung zum Auslösen (84) eines Sendens des im Speicher gespeicherten Schlüssels (4).

11. Diagnosegerät (6), umfassend
- einen Empfänger (61) zum Empfangen eines Schlüssels (4) unter Verwendung von Licht;
- einen Speicher (63) zum Speichern des Schlüssels (4);
- einen Transceiver (65) zum Ausführen einer gesicherten Datenübertragung (88) unter Verwendung des gespeicherten Schlüssels (4),
wobei das Diagnosegerät (6) zur Durchführung eines Verfahrens nach einem der Ansprüche 1 bis 5 ausgestaltet und eingerichtet ist.

12. Diagnosegerät (6) nach Anspruch 11, umfassend einen Lichtsender (62), insbesondere eine Blitzvorrichtung.
